# EUROPEAN PATENT SPECIFICATION

(11) **EP 1 016 806 B1**
(45) Date of publication and mention of the grant of the patent: **09.04.2003**
(21) Application number: 00105843.7
(22) Date of filing: 18.06.1993
(51) Int. Cl.: F16F 9/53, F16F 13/30

(54) **Magnetorheological fluid devices**
Magnetorheologische Flüssigkeitsvorrichtungen
Dispositifs à fluide magnétorhéologique

(30) Priority: 18.06.1992 US 900567; 18.06.1992 US 900571
(43) Date of publication of application: 05.07.2000
(62) Divisional of application: 93916607.0
(73) Proprietor: LORD CORPORATION, Erie, PA 16514-0038 (US)
(72) Inventor: Carlson, J. David, Cary, NC 27511 (US); Chrzan, Michael, J., Parkway, Raleigh, NC 27606 (US); James, Frank O., Girard, PA 16417 (US)
(74) Representative: Dunlop, Brian Kenneth Charles

(56) References cited:
- FR-A- 2 634 530
- JP-A- 63 001 833
- US-A- 4 742 998
- PATENT ABSTRACTS OF JAPAN vol. 006, no. 228 (M-171), 13 November 1982 (1982-11-13) & JP 57 129944 A (AISHIN SEIKI KK), 12 August 1982 (1982-08-12)

## Description

### Field of the Invention

Incompressible fluids have been used in shock absorbers and other dampers, as well as in elastomeric mounts, for decades. The use of controllable fluids, electrorheological (ER) and magnetorheological (MR) fluids in dampers, was first proposed in the early 1950's by Winslow in U.S. Patent No. 2,661,596. The use of a controllable fluid in a damper affords some intriguing possibilities relative to providing widely varying damping for varying conditions encountered by the damper. Nonetheless, the use of controllable fluids was generally restricted to the area of clutches, with a few exceptions, until the mid-1980's.

### Background and Summary of the Invention

Interest in the use of controllable fluids revived in the 1980's as activity in the area of controllable dampers increased. Most of the resurgent activity has occurred relative to ER dampers and associated fluids. While interest and development of ER fluid devices continues, performance of such systems have been disappointing from three standpoints:
1) the damping forces that can be generated by an ER fluid device are limited due to the relatively low yield strengths of the available fluids;
2) ER fluids are susceptible to contamination which significantly degrades performance; and,
3) the strong electric fields required by ER fluids necessitate complicated and expensive high-voltage power supplies and complex control systems.

Faced with these performance restrictions and searching for a technological breakthrough to overcome them, Applicants turned to MR fluids with renewed interest and sought to optimize systems employing them. MR fluids inherently have higher yield strengths and are, therefore, capable of generating greater damping forces. Further, contamination does not pose the performance degradation threat for MR fluids that it does for ER fluids. Still further, MR fluids are activated by magnetic fields which are easily produced by simple, low-voltage electromagnetic coils.

It is therefore among the objects of the present invention to provide an MR damper with improved performance characteristics.
Enhancements include:
■ defining dimensional/operational relationships which provide improved performance;
■ devising piston designs in which the flow path for the magnetic flux is entirely contained within the piston itself;
■ providing an improved twin-tube cylinder design capable of use (with some modification) with either the self contained or spool piston;
■ significantly reducing or eliminating MR fluid losses from the damper;
■ providing an improved fluid valve for controlling the flow of the MR fluid to produce the desired dampening forces.

FR-A-2634530 discloses a hydraulic anti-vibration device intended to be positioned between two rigid elements. The device includes two rigid reinforcements which can be secured to the two rigid elements and an elastomer body connecting the two reinforcements together and forming two sealed chambers. A restricted passage allows the two chambers to communicate permanently with one another. A ferrofluid liquid fills the two chambers and the restricted passageway. The device includes means for generating a magnetic field in at least part of the restricted passageway.

According to the invention there is provided a fluid mount for damping vibration between a first member generating vibrational energy and a second supporting member, the fluid mount comprising:
a) a housing attachable to one of said first and second members;
b) an attachment collar attachable to another one of said first and second members;
c) an elastomeric element bonded to said housing and to said attachment collar and at least partially forming a first fluid chamber;
d) an elastomeric bladder element at least partially forming a second fluid chamber;
e) an intermediate passageway interconnecting said first and said second fluid chambers;
f) a magnetorheological fluid filling said first and second chambers and said intermediate passageway;
g) a magnetic coil contained within said housing for controlling the flow of said magnetorheological fluid through said passageway, the passageway being equipped with a valve means, and
h) means to increase contact of said magnetorheological fluid with said magnetic coil to enhance flow control.

Other features, advantages and characteristics of the present invention will become apparent after a reading of the following detailed description.

### Brief Description of Drawings

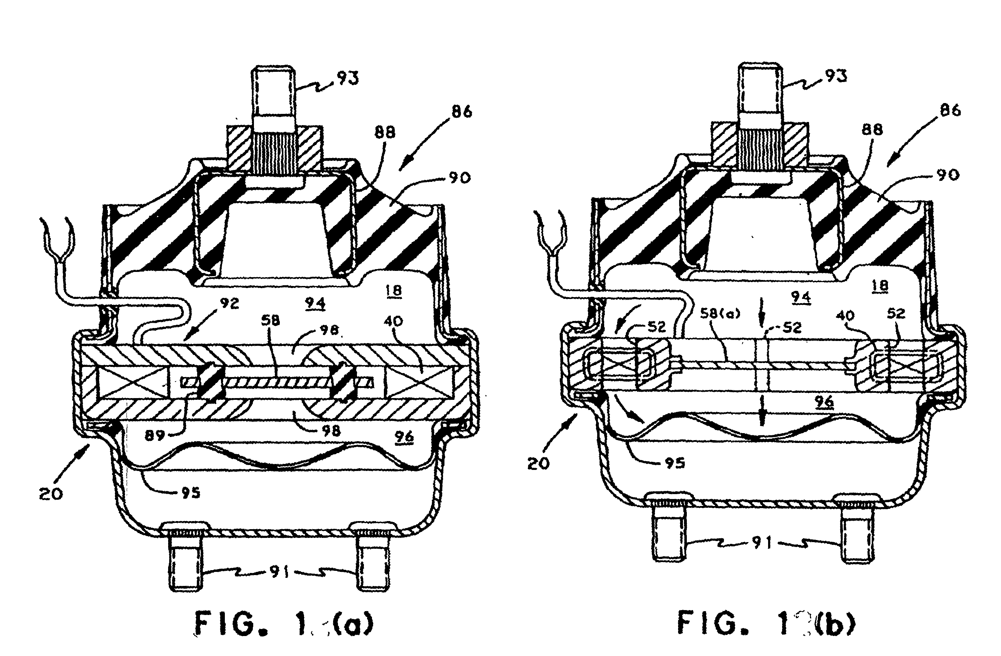

Fig 1(a) is a schematic cross-sectional side view of a first mount configuration employing an MR fluid; and
Fig 1(b) is a schematic cross-sectional side view of a second mount configuration employing an MR fluid.

### Description of the Preferred Embodiments

A pair of mounts employing the features of the present invention are depicted in Figs 1(a) and 1(b) generally at 86. The embodiment of mount 86 in Fig 1(a) has a baffle plate 58 which is held in place by snap-in-spacers 89, and a solenoid-type coil 40 wrapped within housing 20. Spacers 89 are made of a non-magnetic, preferably plastic material. Baffle plate 58 diverts the flow of the MR fluid into more intimate contact with coil 40 enhancing the flow control of the fluid by increasing the capability of the coil to influence the characteristics of the fluid. A first pair of bolts 91 provide means for attachment to a first member (a frame, or the like) and bolt 93 provides means for attachment to a second member (an engine, for example). Elastomeric element 90 is bonded to both attachment collar 88 and housing 20 and comprises the primary spring in the mount 86. Collar 88, elastomeric element 90 and upper surface of housing 92 for baffle plate 58 define a first chamber 94 for containing MR fluid. The lower surface of housing 92 and an elastomeric bladder 95 (which forms the bottom compliance of mount 86) define a second chamber 96 for MR fluid. The orifices 98 in housing 92 operate with coil 40 to define a valve for controlling the flow of MR fluid, as in previous embodiments. The radial extent of orifices 98 is a design parameter which may be adjusted to influence operational characteristics of the mount 86.

The embodiments shown in Fig. 1(b) is similar to that shown in Fig 1(a) in all particulars with the exception that the coil 40 is of the toroidal type with slots 52 serving as the fluid control valve as with the twin tube design depicted in Fig 10(b) of the applicant's European Patent No 0644987. The slots 52 serve as means to increase exposure of the MR fluid to the coil 40, thereby enhancing flow control. No baffle plate is necessary with this design, so a solid divider plate 58a is substituted.

The mounts 86 of Figs 1(a) and 1(b) allow the stiffness of the mount to be controlled in response to operational characteristics of the engine (idle vs high rpm), or vehicle (cornering or straight runs) by use of electronic sensors and control signals giving input to the energy supply of coil 40, in a conventional manner.

The present invention provides an MR fluid damper with a variety of novel characteristics. Two MR fluid mount designs employing the features of the present invention are described.

Various changes, alternatives and modifications will become apparent to those of ordinary skill in the art following a reading of the foregoing description. For, example, while the piston motion being damped has implicitly been axial, it will be appreciated by those of ordinary skill in the art that dampers made in accordance with the specifics of this invention will be equally well adapted for damping rotary motion, or combinations of linear and rotary motion, as well. Further, although electromagnets have been described exclusively, it will be appreciated that permanent magnets may be utilized to provide some or all of the magnetic field. It is intended that all such changes, alternatives and modifications as come within the scope of the appended claims be considered part of the present invention.

## Claims

1. A fluid mount (86) for damping vibration between a first member generating vibrational energy and a second supporting member, comprising:
a) a housing (20) attachable to one of said first and second members;
b) an attachment collar (88) attachable to another one of said first and second members;
c) an elastomeric element (90) bonded to said housing (20) and to said attachment collar (88) and at least partially forming a first fluid chamber (94);
d) an elastomeric bladder element (95) at least partially forming a second fluid chamber (96);
e) an intermediate passageway (98) interconnecting said first and second fluid chambers;
f) a magnetorheological fluid filling said first (94) and second (96) chambers and said intermediate passageway (98);
g) a magnetic coil (40) contained within said housing (20) for controlling the flow of said magnetorheological fluid through said passageway (98), the mount **characterised by** the passageway (98) being equipped with a valve means (58), and
h) means (52) to increase contact of said magnetorheological fluid with said magnetic coil (40) to enhance flow control.

2. The fluid mount of Claim 1 wherein said means (52) to increase contact comprises a baffle plate (58a) positioned within said intermediate passageway to alter the flow of said magnetorheological fluid and thereby increase its exposure to said magnetic coil (40).

3. The fluid mount of Claim 1 wherein said coil (40) is comprised of a toroidally wound element made in a plurality of segments interspersed with a plurality of slots (52) which form said intermediate passageway (98), said plurality of slots forming said means to increase contact.

## Patentansprüche

1. Fluidbefestigung (86) zum Dämpfen von Vibrationen zwischen einem ersten Element, welches Vibrationsenergie erzeugt, und einem zweiten Trägerelement, folgendes umfassend:
a) ein Gehäuse (20), welches an dem ersten oder zweiten Element befestigbar ist;
b) ein Befestigungskragen (88), welches an dem entsprechend anderen ersten oder zweiten Element befestigbar ist;
c) ein elastisches Element (90), welches an das Gehäuse (20) und an den Befestigungskragen (88) geklebt ist und wenigstens teilweise eine erste Fluidkammer (94) ausbildet;
d) ein elastisches Balgelement (95), welches wenigstens teilweise eine zweite Fluidkammer (96) ausbildet;
e) ein Zwischenkanal (98), welcher die beiden Fluidkammern miteinander verbindet;
f) ein magnetrheologisches Fluid, welches die erste (94) und die zweite (96) Kammer und den Zwischenkanal (98) füllt;
g) eine Magnetspule (40), welche innerhalb des Gehäuses (20) angeordnet ist, zum Steuern des Flusses des magnetrheologischen Fluids durch den Kanal (98), wobei die Befestigung **dadurch gekennzeichnet ist, daß** der Kanal (98) ein Ventilmittel (58) aufweist und
h) Mittel (52) zum Erhöhen des Kontaktes des magnetrheologischen Fluides mit der Magnetspule (40) um die Flußsteuerung zu verbessern.

2. Fluidbefestigung nach Anspruch 1, **dadurch gekennzeichnet, daß** das Mittel (52) zum Erhöhen des Kontaktes eine Ablenkplatte (85a) aufweist, welche in dem Zwischenkanal angeordnet ist, um den Fluß des magnetrheologischen Fluids zu ändern und dieses dadurch verstärkt der Magnetspule (40) auszusetzen.

3. Fluidbefestigung nach Anspruch 1, **dadurch gekennzeichnet, daß** die Spule (40) ein ringförmig gewickeltes Element aufweist, welches aus mehreren Segmenten ausgebildet ist, die mit mehreren Schlitzen (52) durchsetzt sind, welche den Zwischenkanal (98) ausbilden, wobei diese Schlitze das Mittel zum Erhöhen des Kontakts ausbilden.

## Revendications

1. Support fluide (86) pour amortir la vibration entre un premier élément générant une énergie vibratoire et un second élément de support, comprenant :
(a) un boîtier (20) susceptible d'être fixé à l'un desdits premier et second éléments ;
(b) un collier de fixation (88) susceptible d'être fixé à un autre desdits premier et second éléments ;
(c) un élément élastomère (90) lié audit boîtier (20) et audit collier de fixation (88) et formant au moins partiellement une première chambre de fluide (94) ;
(d) un élément de vessie (95) en élastomère, formant au moins partiellement une seconde chambre de fluide (96);
(e) un passage intermédiaire (98) interconnectant lesdites première et seconde chambres de fluide ;
(f) un fluide magnétorhéologique remplissant lesdites première (94) et seconde (96) chambres et ledit passage intermédiaire (98) ;
(g) une bobine magnétique (40) contenue à l'intérieur dudit boîtier (20) pour commander l'écoulement dudit fluide magnétorhéologique à travers ledit passage (98), le support étant **caractérisé par le fait que** le passage (98) est équipé d'un moyen de valve (58) ; et
(h) un moyen (52) pour augmenter le contact dudit fluide magnétorhéologique avec ladite bobine magnétique (40) pour augmenter le contrôle de l'écoulement.

2. Support fluide selon la revendication 1, dans lequel ledit moyen (52) pour augmenter le contact comprend un déflecteur (58a) positionné à l'intérieur dudit passage intermédiaire pour modifier l'écoulement dudit fluide magnétorhéologique et, de cette façon, augmenter son exposition à ladite bobine magnétique (40).

3. Support fluide selon la revendication 1, dans lequel ladite bobine (40) se compose d'un élément enroulé de façon toroïdale, réalisé en une pluralité de segments parsemés d'une pluralité de fentes (52) qui forment ledit passage intermédiaire (98), ladite pluralité de fentes formant ledit moyen pour augmenter le contact.
